Europäisches Patentamt

**(19)** European Patent Office

Office européen des brevets

**(11)** Numéro de publication : **0 383 660 B1**

# FASCICULE DE BREVET EUROPEEN

**(12)**

**(45)** Date de publication du fascicule du brevet :
**27.12.91 Bulletin 91/52**

**(51)** Int. Cl.⁵ : **H04L 12/56**

**(21)** Numéro de dépôt : **90400361.3**

**(22)** Date de dépôt : **09.02.90**

**(54) Réservation de débits dans un réseau de paquets asynchrones.**

**(30)** Priorité : **17.02.89 FR 8902073**

**(43)** Date de publication de la demande :
**22.08.90 Bulletin 90/34**

**(45)** Mention de la délivrance du brevet :
**27.12.91 Bulletin 91/52**

**(84)** Etats contractants désignés :
**BE DE DK ES GB IT NL SE**

**(56)** Documents cités :
**EP-A- 0 113 639**
**IEEE JOURNAL ON SELECTED AREAS IN COMMUNICATIONS, vol. 6, no. 9, décembre 1988, pages 1609-1616, IEEE, New York, US; H. OHNISHI et al.: "Flow control schemes and delay/loss tradeoff in ATM networks"**
**IBM TECHNICAL DISCLOSURE BULLETIN, vol. 29, no. 12, mai 1987, pages 5485-5487, New York, US; "X.25 over an SNA network: call regulation system"**

**(73)** Titulaire : **Girard, Alain**
**14, Résidence Placen ar Guer**
**F-22300 Lannion (FR)**
Titulaire : **Boyer, Pierre**
**68, Résidence Corlay**
**F-22300 Lannion (FR)**
Titulaire : **Coudreuse, Jean-Pierre**
**Chemin du Penher-Servel**
**F-22300 Lannion (FR)**

**(72)** Inventeur : **Girard, Alain**
**14, Résidence Placen ar Guer**
**F-22300 Lannion (FR)**
Inventeur : **Boyer, Pierre**
**68, Résidence Corlay**
**F-22300 Lannion (FR)**
Inventeur : **Coudreuse, Jean-Pierre**
**Chemin du Penher-Servel**
**F-22300 Lannion (FR)**

**(74)** Mandataire : **Cabinet Martinet & Lapoux**
**BP 405**
**F-78055 Saint Quentin en Yvelines Cédex (FR)**

**Description**

La présente invention concerne de manière générale la commutation de paquets. Plus particulièrement, l'invention concerne un procédé pour réserver des débits de communication dans un réseau de commutation de paquets asynchrones et éventuellement synchrones et des commutateurs de paquets pour la mise en oeuvre du procédé.

L'acheminement de débits quelconques et le partage de mêmes ressources de transmission constituent l'intérêt majeur de la commutation temporelle asynchrone. Cette technique de commutation est parmi les techniques de commutation connues la plus apte à répondre aux différentes contraintes qui pèsent sur les futurs réseaux numériques à intégration de services à large bande (RNIS-LB), notamment des contraintes d'adaptabilité, de souplesse et d'évolutivité. Toutefois dans un réseau à commutation temporelle asynchrone, en application de la statistique des flux, aucun contrôle de débit n'est effectué et toute nouvelle demande de communication est acceptée par le réseau. Lorsque le trafic s'accroît et prend une certaine importance, des files d'attente incluses dans des commutateurs du réseau débordent et il en résulte une dégradation sensible des communications. Le taux de perte de paquet est alors tel que la qualité des communications n'est plus acceptable.

La présente invention vise essentiellement à fournir un procédé pour réserver des débits de communication dans un réseau de commutation de paquets. Selon le procédé de l'invention une nouvelle communication n'est acceptée que si elle n'entraîne pas un dépassement d'un débit maximum écoulable par les commutateurs du réseau.

A cette fin, le procédé selon l'invention pour réserver des débits de communication dans un réseau de commutation temporelle de paquets dans lequel des paquets de service sont transmis dans le réseau en début et fin d'une communication entre des terminaux connectés au réseau afin notamment de déterminer une route d'acheminement pour la communication et de transmettre des informations de service entre les terminaux, est caractérisé en ce que des mots de débit représentatifs de débits de la communication sont inclus dans les paquets de service pour incrémenter des informations de débit mémorisées dans des commutateurs du réseau traversés par les paquets de service et représentatives de débits totaux écoulés par les commutateurs afin de réserver lesdits débits de la communication préalablement à l'établissement de la communication, et pour décrémenter les informations de débit en fin de la communication afin de libérer dans les commutateurs les débits de la communication, et en ce qu'une communication n'est établie dans le réseau que si les informations de débits mémorisées dans les commutateurs sont représentatives d'un débit inférieur à un débit maximum écoulable par les commutateurs.

L'invention vise également à fournir des commutateurs temporels de paquets pour la mise en oeuvre du procédé selon l'invention.

A cette fin, un commutateur est tel que défini dans la revendication 3, et comprend particulièrement des moyens pour mémoriser lesdites informations de débit et les traiter en fonction des mots de débit détectés dans les paquets de service.

De préférence, les moyens pour mémoriser inclus dans le commutateur présentent des caractéristiques définies dans les revendications 4 et 5.

L'invention sera mieux comprise à la lecture de la description suivante du procédé et de plusieurs réalisations préférées des commutateurs de paquets selon l'invention en référence aux dessins annexés correspondants dans lesquels :

— la Fig. 1 montre la structure d'un réseau de commutation en chaîne constitué d'une pluralité de commutateurs de paquets selon l'invention dans lequel des transferts de paquets de service sont effectués afin de réserver des débits pour une communication unidirectionnelle selon un sens aller.

— la Fig. 2 montre la structure d'un paquet de service transmis dans le réseau de commutation selon la Fig. 1 ;

— la Fig. 3 montre le réseau de commutation selon la Fig. 1 dans lequel des transferts de paquets de service sont effectués afin de réserver des débits pour une communication unidirectionnelle selon un sens retour ;

— la Fig. 4 montre le réseau de commutation selon la Fig. 1 dans lequel des transferts de paquets de service sont effectués afin de réserver des débits pour une communication bidirectionnelle ;

— la Fig. 5 est un bloc-diagramme d'un commutateur de paquets selon l'invention ; et

— la Fig. 6 est un bloc-diagramme détaillé d'un dispositif de réservation de débits inclus dans le commutateur selon l'invention montré à la Fig. 5.

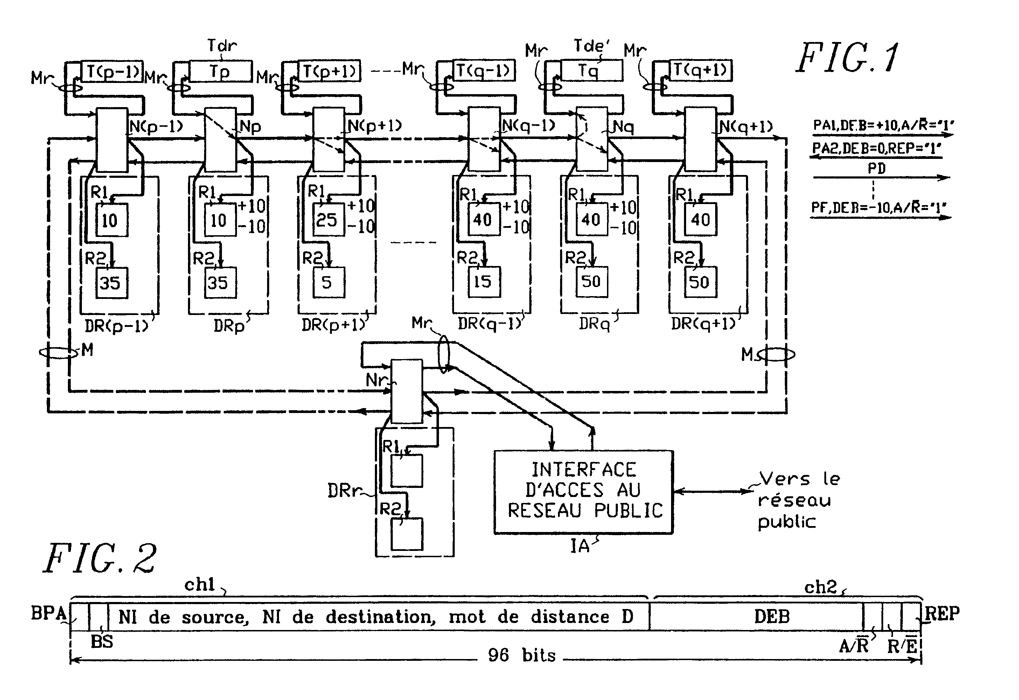

En référence à la Fig. 1, il est considéré un réseau de communication en chaîne du type à commutation temporelle asynchrone de paquets tel que décrit dans la EP-A-03461164 publiée le 13 Décembre 1989. Le réseau est constitué d'une pluralité de noeuds de commutation analogues N connectés en chaînes par des multiplex bidirectionnels M. Un noeud de commutation quelconque Np est constitué par exemple par un commutateur de paquets 3 x 3, c'est-à-dire à trois voies multiplex entrantes et trois voies multiplex sortantes, et du type à conversion paragonale (parallèle-diagonale) tel que décrit dans le brevet FR-B-2538976 auquel correspondant la EP-A-0113639. Un noeud Nr du réseau est relié par une voie multiplex de raccordement Mr à une interface d'accès au réseau public de télécommunications IA, telle qu'une interface T normalisée par le Comité Européen de Normalisation Electronique (CENELEC) pour le raccordement d'une installation téléphonique à un réseau numérique à intégration de service à large bande (RNIS-LB). Les noeuds Np ≠ Nr connectent au réseau des terminaux Tp supportant chacun une application téléphonique, informatique ou autre. A chacun des noeuds de commutation Np du réseau ainsi qu'à l'interface IA est associé un dispositif de réservation de débits DRp. Aux terminaux Tp ainsi qu'à l'interface d'accès IA sont attribués des numéros d'identification respectifs NI.

Dans un tel réseau, les terminaux sont dotés de l'intelligence nécessaire afin de choisir des routes d'acheminement pour les paquets à transmettre à travers le réseau. Préalablement à une communication entre deux terminaux quelconques Tp et Tq connectés au réseau a lieu une phase d'établissement de la communication ou phase d'appel. Pendant la phase d'appel, les terminaux Tp et Tq considérés respectivement comme le demandeur et le demandé se transmettent mutuellement des paquets de service appelés paquets d'appel ou paquets traceurs PA afin de déterminer une route d'acheminement et d'échanger toutes les informations nécessaires à la communication.

En référence à la Fig. 2, un paquet d'appel PA est composé par exemple de 96 bits. Dans un premier champ ch1 relatif à la signalisation, l'identification et l'acheminement du paquet, le paquet PA comprend notamment des bits de signalisation BPA et BS, des numéros d'identification NI de source et de destination, et un mot de distance D ainsi que des emplacements temporels vides pour inclure des données d'acheminement à échanger entre les terminaux. Le bit de signalisation BPA à l'état "1" indique aux noeuds de commutation que le paquet est un paquet d'appel PA. Dans le cas contraire, le bit BPA = "0" signale un paquet de données PD. Le bit BS est positionné par le terminal de source ayant transmis le paquet PA afin de déterminer le sens de transmission du paquet dans la chaîne. Les numéros d'identification NI de source et de destination indiquent respectivement le terminal ayant transmis le paquet PA et le terminal destinataire du paquet. Le mot de distance D est utilisé pour déterminer le nombre de noeuds de communication qui séparent le terminal de source du terminal de destination. Ce nombre de noeuds de communication est appelé "distance" conformément à la EP-A-0346164. Le mot de distance D est initialisé à zéro à la transmission du paquet PA par le terminal de source et est incrémenté de 1 à chaque traversée d'un noeud de communication pendant le parcours du packet dans la chaîne, de sorte qu'une fois le paquet d'appel PA arrivé au terminal de destination, le mot D est égal à la distance qui sépare le terminal de source du terminal de destination. Cette distance est ensuite incluse dans un emplacement temporel vide d'un autre paquet d'appel PA retourné en réponse par le terminal de destination vers le terminal de source. Le terminal de source mémorise cette distance et l'inclue dans un champ d'acheminement de chacun des paquets de données PD transmis pendant la communication.

Selon l'invention, un second champ ch2 relatif aux réservations de débits dans les noeuds de commutation est prévu dans un paquet d'appel PA ainsi que dans des paquets de fin de communication PF ayant une structure analogue au paquet PA. Le second champ ch2 comprend un mot de débit DEB et trois bits de signalisation et de dialogue A/$\overline{R}$, R/$\overline{E}$ et REP.

Le mot de débit DEB est un mot signé de valeur positive ou négative. Les valeurs négatives du mot de débit DEB sont représentées en complément à 2. Le mot DEB est destiné à incrémenter ou décrémenter, selon son signe + ou −, les contenus de registres de réservation de débits R1 et R2 inclus dans les différents dispositifs de réservation de débits DRp.

Le bit A/$\overline{R}$ à l'état "1" indique que les réservations de débits sont relatives à des voies multiplex correspondant à un sens de transmission aller emprunté par le paquet PA ou PF. Le bit A/$\overline{R}$ à l'état "0" indique que les réservations de débits sont relatives à des multiplex correspondant à un sens de transmission retour inverse au sens de transmission emprunté par le paquet PA ou PF.

Le bit R/$\overline{E}$ à l'état "1" indique une réussite des réservations de débits dans les différents noeuds de commutation traversés par un paquet d'appel PA. Le bit R/$\overline{E}$ à l'état "0" indique que dans au moins l'un des noeuds de commutation traversés par le paquet PA la réservation a échoué, c'est-à-dire que le débit indiqué par le mot DEB n'est pas disponible au moins dans l'un des noeuds de commutation traversés.

Le bit REP est un bit de réponse ; il est positionné dans un paquet d'appel PA transmis par un terminal en réponse à un premier paquet d'appel PA reçu. Le bit REP est positionné au même état que le bit R/$\overline{E}$ du premier paquet d'appel PA reçu et est destiné à indiquer en retour au terminal ayant transmis le premier paquet d'appel PA la réussite ou l'échec des réservations de débits. Dans le cas où le bit REP = "1", les réservations de débits ont été effectuées avec succès dans les différents noeuds de commutation traversés et la communication peut alors avoir lieu. Dans le cas où le bit REP = "0", les réservations ont échoué et le terminal renouvelle sa tentative dans un laps de temps déterminé ou effectue immédiatement une autre tentative selon un autre sens de transmission.

Les opérations de réservation de débit pour trois types de communication possibles entre les deux terminaux Tdr et Tdé sont maintenant décrits en référence aux Figs. 1, 3 et 4.

En référence à la Fig. 1, il est considéré une première communication unidirectionnelle entre les terminaux Tdr et Tdé selon un sens de transmission aller du terminal Tdr vers le terminal Tdé. Le terminal Tdr est le terminal de source de données et a des paquets de données PD à transmettre au terminal Tdé. Le débit de communication demandé par le terminal Tdr est par exemple de 10 unités.

Le terminal Tdr transmet à destination du terminal Tdé un premier paquet d'appel PA1 comprenant un mot de débit DEB = +10 et un bit $A/\overline{R}$ = "1". Le paquet PA1 est détecté dans chacun des noeuds de commutation traversés Np à Nq et les mot DEB = +10 et bit $A/\overline{R}$ = "1" sont lus dans le paquet PA1 par les dispositifs de réservation de débits correspondant DRp à DRq. Le cheminement du paquet d'appel PA1 à travers les noeuds de commutation Np à Nq est montré à la Fig. 1 par des flèches en traits discontinus. Des premiers registres de réservation R1 sont inclus respectivement dans les dispositifs de réservation de débits DRp à DRq et sont affectés au sens de transmission aller suivi par le paquet PA1. Les contenus de ces registres R1 sont incrémentés du débit +10 au fur et à mesure de la progression du paquet PA1 et sont comparés avec un débit maximum DBmax écoulable par un noeud de commutation afin de positionner l'état du bit $R/\overline{E}$. Lorsque le paquet d'appel PA1 atteint le noeud de commutation de destination Nq, le bit $R/\overline{E}$ est par exemple à l'état "1" et indique la réussite des réservations de débits, c'est-à-dire que les contenus incrémentés des registres R1 n'ont pas dépassé la valeur du débit maximum DBmax.

A la réception du premier paquet d'appel PA1, le terminal demandé Tdé transmet en réponse un second paquet PA2. Le second paquet d'appel PA2 comprend un mot de débit DEB = "0" et un bit REP = "1". A la réception du paquet PA2, le terminal Tdr est informé par le bit REP = "1" que les réservations de débits sont effectives, et commence la transmission des paquets de données au débit de +10 unités.

A la fin de la communication, un paquet de fin de communication PF est transmis par le terminal Tdr vers le terminal Tdé afin de décrémenter les contenus des premiers registres R1. Le paquet PF comprend un mot de débit DEB = –10 et un bit $A/\overline{R}$ = "1".

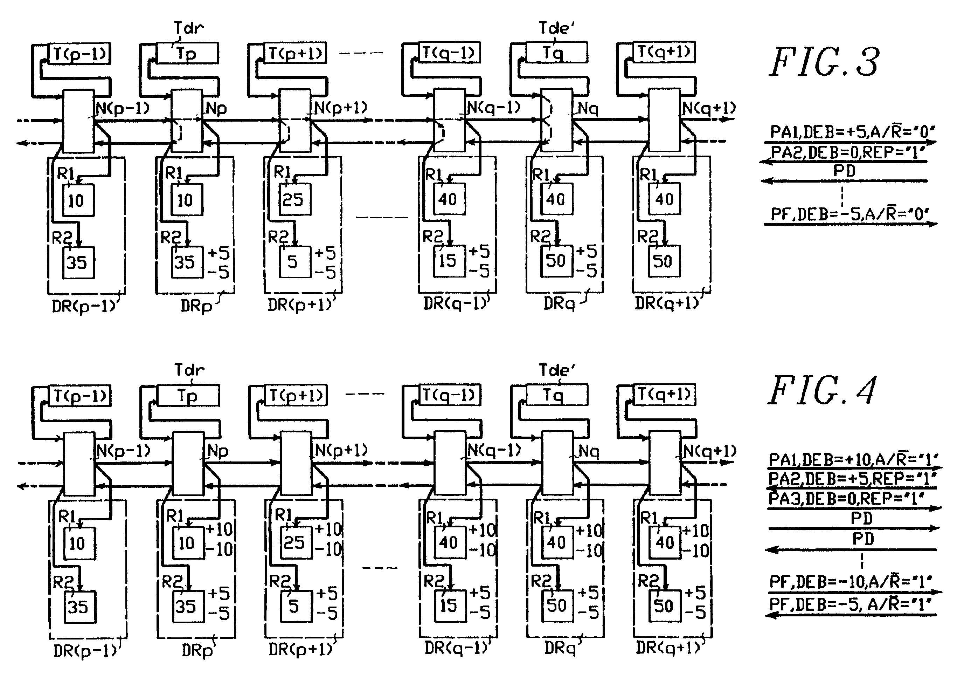

En référence à la Fig. 3, il est considéré une seconde communication unidirectionnelle entre les terminaux Tdr et Tdé selon un sens de transmission retour du terminal Tdé vers le terminal Tdr. Le terminal Tdé est le terminal de source de données et transmet des paquets de données PD vers le terminal Tdr.

Afin d'établir la communication et d'effectuer les réservations de débits, le terminal demandeur Tdr transmet à destination du terminal Tdé un premier paquet d'appel PA1 comprenant un mot de débit DEB = +5 et un bit $A/\overline{R}$ = "0". L'acheminement du paquet d'appel PA1 à travers les noeuds de communication Np à Nq est montré à la Fig. 3 par des flèches en traits discontinus. Le bit $A/\overline{R}$ = "0" est détecté par les dispositifs de réservation de débits DRp à DRq et indique que la valeur du mot DEB = +5 est à ajouter aux contenus de seconds registres de réservation de débits R2 inclus respectivement dans les dispositifs DRp à DRq. De manière analogue à la première communication unidirectionnelle décrite ci-dessus, dans le cas où aucun des contenus incrémentés des registres R2 n'atteint le débit maximum DBmax écoulable par un noeud de commutation, le bit $R/\overline{E}$ du paquet PA1 est à l'état "1" lorsque le paquet PA1 atteint le terminal Tdé et informe celui-ci de la réussite des réservations de débits. Le terminal Tdé transmet ensuite au terminal Tdr un second paquet d'appel PA2 comprenant un mot de débit DEB = "0" et un bit REP = "1", avant de commencer la transmission des paquets de données PD. A la fin de la communication, le terminal Tdr transmet vers le terminal Tdé un paquet de fin de communication PF ayant un mot de débit DEB = –5 et un bit $A/\overline{R}$ = "0" afin de décrémenter les contenus des seconds registres R2.

En référence à la Fig. 4, il est considéré une communication bidirectionnelle entre les terminaux Tdr et Tdé. Afin d'établir la communication et d'effectuer les réservations de débits, trois paquets d'appel PA1, PA2 et PA3 sont échangés entre les terminaux Tdr et Tdé. Le premier paquet PA1 est transmis par le terminal Tdr et comprend un mot de débit DEB = +10 et un bit $A/\overline{R}$ = "1" afin d'incrémenter les contenus des premiers registres R1. A la réception du paquet PA1, le terminal Tdé transmet le second paquet PA2. Le paquet PA2 comprend un mot de débit DEB = +5, un bit $A/\overline{R}$ = "1" et un bit REP = "1". Les seconds registres R2 des dispositifs DRp à DRq sont incrémentés lorsque les mot DEB = +5 et bit $A/\overline{R}$ = "1" du paquet PA2 sont détectés. Le bit REP = "1" du paquet PA2 informe le terminal Tdr de la réussite des réservations de débits effectuées par le paquet PA1. Le troisième paquet PA3 comprend un mot de débit DEB = "0" et un bit REP = "1" et est transmis par le terminal Tdr afin d'informer le terminal Tdé de la réussite des réservations de débits effectuées par le paquet PA2. Les terminaux Tdr et Tdé transmettent ensuite des paquets de données PD respectivement à des débits de 10 et 5 unités. A la fin de la communication, deux paquets PF sont transmis respectivement par les terminaux Tdr et Tdé afin de décrémenter les débits correspondants contenus dans les premier et second registres R1 et R2 des dispositifs DRp à DRq.

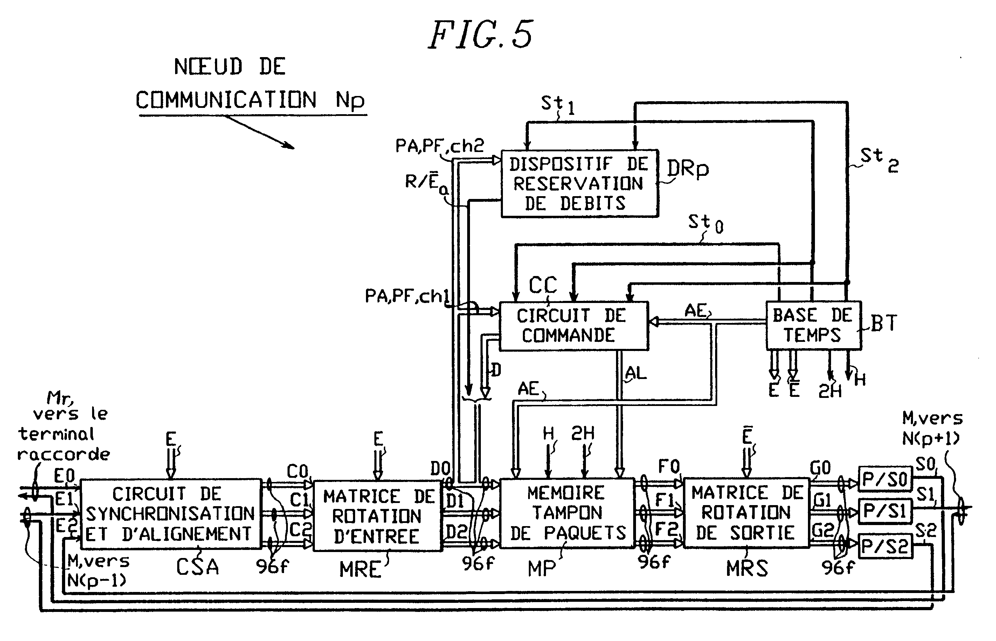

En référence à la Fig. 5, un noeud de communication quelconque Np du réseau en chaîne est du type à conversion paragonale tel que décrit dans le brevet FR-B-2538976 et comprend essentiellement une base de temps BT, un circuit de synchronisation et d'alignement CSA, une matrice de rotation d'entrée MRE, une mémoire tampon de paquets MP, une matrice de rotation de sortie MRS, un circuit de commande CC, et un dispositif de réservation de débits DRp.

La base de temps BT produit une horloge de rythme H et une horloge 2H de fréquence double à celle de l'horloge H, des adresses d'écriture de paquet AE, des adresses de voie multiplex "00", "01" et "10" transmises cycliquement selon l'ordre ci-dessus dans un bus E et selon un ordre inverse, "10", "01" et "00", dans un bus $\overline{E}$, et trois signaux de voie multiplex $St_0$, $St_1$ et $St_2$.

Les horloges H et 2H sont fournies à la mémoire tampon MP et commandent le séquencement des écritures et lectures de paquets dans la mémoire tampon MP.

Les adresses d'écriture de paquet AE sont délivrées cycliquement à la mémoire tampon MP et à des entrées de trois files d'adresses de lecture (FIFOs non représentées) incluses dans le circuit de commande CC.

Les adresses de voie multiplex "00", "01" et "10" fournies par la base de temps ST sont associées respectivement à trois voies multiplex entrantes E0, E1 et E2 et à trois voies multiplex sortantes S0, S1 et S2 et déterminent des intervalles temporels correspondants t0, t1 et t2. Les adresses sont appliquées à des entrées de commande de rotation des matrices de rotation d'entrée MRE et de sortie MRS respectivement à travers les bus E et $\overline{E}$.

Les voies multiplex E0 et S0, E1 et S2, et S1 et E2 constituent respectivement la voie multiplex bidirectionnelle de raccordement Mr reliant le noeud Np au terminal raccordé Tp, la voie multiplex bidirectionnelle M reliant le noeud Np au noeud N(p − 1), et la voie multiplex bidirectionnelle M reliant le noeud Np au noeud N(p + 1).

Les signaux de voie multiplex $St_0$, $St_1$ et $St_2$ à l'état "1" indiquent respectivement la transmission des adresses de voie multiplex "00", "01" et "10" et les intervalles temporels correspondants t0, t1 et t2. Les signaux de voie multiplex $St_0$, $St_1$ et $St_2$ sont fournis au circuit de commande CC. Les signaux $St_1$ et $St_2$ sont fournis au dispositif de réservation de débits DRp.

Le circuit CSA a pour fonction de recevoir des paquets entrants véhiculés sous forme de bits en série par les voies multiplex E0, E1 et E2, de récupérer la synchronisation, d'aligner les paquets et de les transmettre par groupes de 96 bits en parallèle à la matrice de rotation d'entrée MRE, sous la commande des adresses de voie multiplex "00", "01" et "10" délivrées par le bus E. Trois groupes de 96 bits fournis par les voies multiplex entrantes E0, E1 et E2 sont transmis par le circuit CSA vers trois ports d'entrée C0, C1 et C2 de la matrice de rotation d'entrée MRE respectivement pendant les intervalles temporels t0, t1 et t2.

La matrice de rotation d'entrée MRE réalise un cycle de 0 à 2 permutations circulaires et délivre les paquets sous forme diagonale par trois ports de sorties D0, D1 et D2 à 96 sorties parallèles chacun. Un paquet de service PA ou PF transmis par l'une des voies multiplex entrantes est délivré par les 96 sorties du port D0 en un seul intervalle de temps. Un paquet de données PD est composé de 36 octets soit 96 × 3 bits et est fourni en diagonale par les ports D0 à D2. En supposant que le paquet PD provient de la voie multiplex entrante E0, un premier groupe de bits du paquet PD est fourni par le port D0 pendant l'intervalle temporel t0, un second groupe de bits est fourni par le port D1 pendant l'intervalle temporel t1, et un troisième et dernier groupe de bits du paquet PD est fourni par le port D2 pendant l'intervalle temporel t2.

Le port D0 de la matrice MRE comprend des sorties reliées au circuit de commande CC et au dispositif de réservation de débits DRp afin de transmettre respectivement auxdits circuit et dispositif des informations utiles incluses dans le premier champ ch1 et dans le second champ ch2 d'un paquet PA ou PF délivré par la matrice MRE. D'autres sorties du port D0 sont reliées directement à des entrées correspondantes d'un premier port d'entrée de la mémoire tampon MP. Le circuit de commande CC délivre un mot de distance D pour l'acheminement du paquet PA. Le mot de distance D est appliqué à des entrées correspondantes du premier port d'entrée de la mémoire tampon MP. Lors des opérations de réservation de débits effectuées en fonction des informations lues dans le champ ch1 du paquet PA ou PF, le dispositif de réservation de débits DRp délivre un bit R/$\overline{E}$ actualisé, noté R/$\overline{E}_a$, et l'applique en parallèle avec le mot de distance D à une entrée correspondante du premier port d'entrée de la mémoire tampon MP. Les ports D1 et D2 de la matrice MRE sont reliés respectivement à des second et troisième ports d'entrée de la mémoire tampon MP.

La mémoire tampon MP comprend trois sous-mémoires tampons composées de cellules de mémoire de 96 bits et un circuit d'adressage de lecture (non représentés). Les trois groupes de bits d'un paquet de données sont mémorisés sous forme diagonale respectivement dans les trois sous-mémoires. Le premier groupe est mémorisé dans une cellule d'adresse AE de la première sous-mémoire ; le second groupe est mémorisé dans une cellule d'adresse AE + 1 de la seconde sous-mémoire, et le troisième groupe est mémorisé dans une cellule d'adresse AE + 2 de la troisième sous-mémoire. Le circuit d'adressage de lecture a pour fonction de produire à partir d'une adresse de lecture AL délivrée par le circuit de commande CC des adresses AL + 1 et AL + 2. Les adresses AL, AL + 1 et AL + 2 sont appliquées respectivement à des entrées d'adresses des première, seconde et troisième sous-mémoires pour lire un paquet sortant à transmettre vers la matrice de rotation de sortie MRS.

La matrice MRS réalise un cycle de 2 à 0 permutations circulaires. Ces permutations circulaires sont réalisées dans un sens inverse à celles réalisées par la matrice de rotation d'entrée MRE afin d'obtenir une conversion paragonale inverse et de délivrer les paquets sortants sous forme parallèle. Les paquets sortants sous forme diagonale sont fournis par trois ports de sortie de la mémoire tampon MP respectivement reliés à trois ports d'entrée F0, F1 et F2 de la matrice MRS. Trois ports de sortie G0, G1 et G2 transmettent par groupes de 96 bits les paquets sortants respectivement vers trois voies multiplex sortantes S0, S1 et S2. Des convertisseurs parallèle/série P/S0, P/S1 et P/S2 sont intercalés respectivement entre les ports G0, G1 et G2 et les voies multiplex sortantes S0, S1 et S2 afin de sérialiser les bits des paquets sortants.

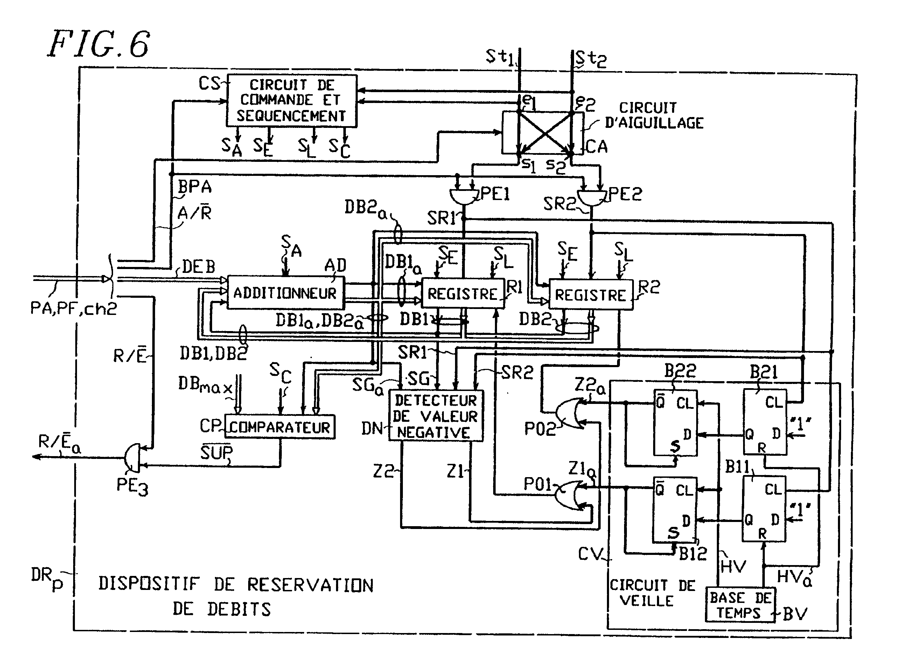

En référence à la Fig. 6, le dispositif de réservation de débits DRp comprend essentiellement un circuit de commande et séquencement CS, un circuit d'aiguillage CA, un additionneur AD, des premier et second registres de réservation de débits R1 et R2, un comparateur de mots CP, un détecteur de valeur négative DN, et un circuit de veille CV.

Le circuit de commande et séquencement CS reçoit les signaux de voie multiplex $St_1$, $St_2$ et le bit BPA et fournit des signaux de commande et séquencement $S_A$, $S_E$ et $S_L$, et $S_C$.

Le signal $S_A$ est appliqué à une entrée de commande de chargement de l'additionneur AD. Les signaux $S_E$ et $S_L$ sont appliqués respectivement à des entrées de commande d'écriture et à des entrées de commande de lecture des registres R1 et R2. Le signal $S_C$ est appliqué à une entrée de commande du comparateur CP afin de sélecter le comparateur et d'activer le fonctionnement du comparateur.

Le circuit d'aiguillage CA a pour fonction de sélecter l'un des registres de réservation de débits R1 et R2 en fonction des signaux de voie multiplex $St_1$, $St_2$ et du bit $A/\overline{R}$. Le circuit d'aiguillage CA comprend des première et seconde entrées e1 et e2 recevant respectivement les signaux $St_1$, $St_2$, et des première et seconde sorties s1 et s2 reliées à des premières entrées respectivement de première et seconde portes ET à deux entrées PE1 et PE2. Le signal $A/\overline{R}$ est appliqué à une entrée de commande d'aiguillage du circuit CA. Des secondes entrées des portes PE1 et PE2 reçoivent le bit BPA. Les portes PE1 et PE2 fournissent respectivement des signaux de sélection de registre SR1 et SR2. Les signaux SR1 et SR2 sont appliqués à des entrées de sélection respectivement des registres R1 et R2.

L'additionneur AD a pour fonction d'ajouter le mot de débit DEB au contenu du registre sélecté R1 ou R2.

L'additionneur AD comprend un premier port d'entrée recevant le mot de débit DEB et un second port d'entrée relié à des ports de sortie des registres R1 et R2 pour recevoir des mots de débit DB1 et DB2 contenus dans les registres R1 et R2.

Les registres de réservation de débits R1 et R2 sont associés respectivement aux voies multiplex E1, S1 et E2, S2. Les mots de débit DB1 et DB2 contenus dans les registres R1 et R2 représentent les débits convoyés respectivement par les voies multiplex E1, S1 et E2, S2. Les registres R1 et R2 comprennent des ports d'entrée reliés à un port de sortie de l'additionneur AD et reçoivent respectivement des mots de débit $DB1_a$ et $DB2_a$ tels que $DB1_a = DB1 \pm \{DEB\}$ et $DB2_a = DB2 \pm \{DEB\}$, où $\{DEB\}$ représente la valeur de débit non-signée correspondant au mot de débit DEB.

Le comparateur CP a pour fonction de détecter un éventuel débordement de débit dans les voies multiplex E1, S1 et E2, S2. Le comparateur CP comprend des premier et second ports d'entrée recevant respectivement le débit maximum DBmax et le mot de débit $DB1_a$ ou $DB2_a$ délivré par l'additionneur AD. Le comparateur CP fournit un signal $\overline{SUP}$ à l'état "1" dans le cas où la valeur du mot de débit $DB1_a$ ou $DB2_a$ est inférieure au débit maximum DBmax et à l'état "0" dans le cas contraire. Le signal $\overline{SUP}$ est appliqué à une première entrée d'une porte ET à deux entrées PE3 dont une seconde entrée reçoit le bit $R/\overline{E}$ lu dans un paquet d'appel PA.

Lorsqu'un paquet de service PA ou PF, c'est-à-dire BPA = "1", est fourni par la matrice de rotation d'entrée MRE et que le signal de voie multiplex $St_1$ (respectivement $St_2$) et le bit $A/\overline{R}$ sont à l'état "1", le signal SR1 (respectivement SR2) est à l'état "1" et sélecte le registre R1 (respectivement R2). Lorsqu'un paquet de service PA ou PF, c'est-à-dire BPA = "1", est fourni par la matrice de rotation d'entrée MRE et que le signal de voie multiplex $St_1$ (respectivement $St_2$) et le bit $A/\overline{R}$ sont respectivement aux états "1" et "0", le signal SR2 (respectivement SR1) est à l'état "1" et sélecte le registre R2.

Lorsqu'un paquet de service PA ou PF est fourni par la matrice MRE et que le registre R1 (respectivement R2) est sélecté, le circuit de commande et séquencement CS produit le signal $S_L$ et consécutivement le registre R1 (respectivement R2) délivre en sortie le mot de débit DB1 (respectivement DB2). Les mots de débit DEB et DB1 (respectivement DB2) sont alors appliqués respectivement aux premier et second ports d'entrée de l'additionneur AD et le circuit de commande et séquencement CS produit le signal $S_A$ commandant le chargement desdits mots dans l'additionneur AD. L'additionneur AD délivre ensuite le mot de débit $DB1_a = DB1 \pm \{DEB\}$ (respectivement $DB2_a = DB2 \pm \{DEB\}$) et le circuit de commande et séquencement CS produit les signaux $S_A$ et $S_C$ pour commander l'écriture du mot de débit $DB1_a$ (respectivement $DB2_a$) dans le registre R1 (respectivement R2) et comparer le mot $DB1_a$ au débit maximum DBmax dans le comparateur CP.

Dans le cas où le mot de débit $DB1_a$ (respectivement $DB2_a$) fourni par l'additionneur AD est de valeur inférieure au débit maximum DBmax, le signal $\overline{SUP}$ = "1" ouvre la porte PE3, et le bit sortant $R/\overline{E}_a$ est au

même état que le bit entrant R/$\overline{E}$.

Dans le cas contraire où le mot de débit DB1$_a$ (respectivement DB2$_a$) fourni par l'additionneur AD est de valeur supérieure au débit maximum DBmax, le signal $\overline{SUP}$ = "0" ferme la porte PE3, et le bit sortant R/$\overline{E}_a$ est forcé à l'état "0" et indique un échec de la réservation.

Le détecteur de valeur négative DN est relié à des sorties des registres R1 et R2 et de l'additionneur AD pour recevoir des bits de signe SG et SG$_a$ correspondant respectivement aux mots de débit DB1, DB2 et DB1$_a$, DB2$_a$. Les signaux de sélection SR1 et SR2 sont également fournis au détecteur de valeur négative DN afin de l'informer du registre de réservation de débits R1 ou R2 qui est sélecté et donc de l'origine du bit de signe SG ou SG$_a$ lu par le détecteur. Lorsqu'un bit de signe SG, SG$_a$ = "1" indiquant une valeur négative et que le signal de sélection SR1 = "1" (respectivement SR2) sont lus par le détecteur DN, le détecteur DN fournit un signal de déclenchement de registre Z1 (respectivement Z2) qui est appliqué à une entrée de remise à zéro du registre R1 (respectivement R2) à travers une porte OU à deux entrées PO1 (respectivement PO2). Le détecteur de valeur négative DN prévient ainsi la prise en compte de valeurs négatives de mots de débit, valeurs négatives qui sont dues par exemple à des erreurs de calcul de l'additionneur AD.

Le circuit de veille CV a pour fonction d'initialiser périodiquement les registres R1 et R2 afin d'éviter d'éventuels blocages dus par exemple à des valeurs erronées contenues dans les registres R1 et R2 et non représentatives des débits effectivement écoulés. A cette fin, le circuit de veille CV surveille l'activité des voies multiplex E1, S1 et E2, S2 et initialise à zéro les registres R1 et R2 lorsqu'aucune activité n'est détectée.

Le circuit de veille CV comprend une base de temps BV, et deux paires de bascules de type D, B11, B12 et B21, B22. Les bascules B11 et B12 produisent un signal d'initialisation Z1$_a$ destiné au registre R1. Les bascules B21 et B22 produisent un signal d'initialisation Z2$_a$ destiné au registre R2.

La base de temps BV établit des signaux impulsionnels d'horloge de veille HV et HV$_a$ à très basse fréquence. Le signal HV est appliqué à des entrées d'horloge CL des bascules B12 et B22. Le signal HV$_a$ est sensiblement déphasé par rapport au signal HV et est appliqué à des entrées R des bascules B11 et B21 pour remise à l'état "0". Des entrées d'horloge CL des bascules B11 et B21 reçoivent respectivement les signaux de sélection SR1 et SR2. Des entrées de données D des bascules B11 et B21 sont à l'état "1". Des sorties Q des bascules B11 et B21 sont reliées à des entrées de données D respectivement des bascules B12 et B22. Des sorties inverses $\overline{Q}$ des bascules B12 et B22 sont bouclées sur des entrées de remise à l'état "1", S, et délivrent respectivement les

signaux d'initialisation Z1$_a$ et Z2$_a$. Les signaux d'initialisation Z1$_a$ et Z2$_a$ sont appliqués à travers les portes PO1 et PO2 aux entrées de remise à zéro respectivement des registres R1 et R2.

Dans le cas où entre deux impulsions des signaux d'horloge de veille HV et HV$_a$ le signal SR1 (respectivement SR2) vient au moins une fois à l'état "1" et sélecte le registre R1 (respectivement R2), la bascule B11 (respectivement B21) est écrite à l'état "1", et lorsqu'intervient ensuite une impulsion du signal HV à l'état "1", l'état "1" de la bascule B11 (respectivement B21) est écrit dans la bascule B12 (respectivement B22) et le signal Z1$_a$ (respectivement Z2a) est consécutivement déterminé à l'état inactif "0". Une activité a été détectée dans le registre R1 (respectivement R2) et celui-ci n'est donc pas initialisé. Une impulsion du signal HV$_a$ survient après l'impulsion du signal HV et remet à l'état "0" la bascule B11 (respectivement B21).

Dans le cas où le signal SR1 (respectivement SR2) reste à l'état "0" entre deux impulsions des signaux d'horloge de veille HV et HV$_a$, l'état de la bascule B12 (respectivement B22) est "0" lorsqu'intervient l'impulsion du signal HV, et le signal Z1$_a$ (respectivement Z2$_a$) commute et reste à l'état "1" pendant une brève durée avant la remise à zéro de la bascule B12 (respectivement B22) du fait du bouclage de la sortie $\overline{Q}$ de la bascule avec l'entrée de remise à l'état "0", R. L'impulsion à l'état "1" du signal Z1$_a$ (respectivement Z2$_a$) initialise à zéro le registre R1 (respectivement R2).

**Revendications**

1. Procédé pour réserver des débits de communication dans un réseau de commutation temporelle de paquets dans lequel des paquets de service (PA, PF) sont transmis dans le réseau en début et fin d'une communication entre des terminaux (Tdr, Tdé) connectés au réseau afin notamment de déterminer une route d'acheminement pour la communication et de transmettre des informations de service entre les terminaux (Tdr, Tdé), caractérisé en ce que des mots de débit (DEB) représentatifs de débits de la communication sont inclus dans les paquets de service (PA, PF) pour incrémenter des informations de débit (DB1, DB2) mémorisées dans des commutateurs (Np à Nq) du réseau traversés par les paquets de service (PA, PF) et représentatives de débits totaux écoulés par les commutateurs (Np à Nq) afin de réserver lesdits débits de la communication préalablement à l'établissement de la communication, et pour décrémenter les informations de débit (DB1, DB2) en fin de la communication afin de libérer dans les commutateurs (Np à Nq) les débits de la communication, et en ce qu'une communication n'est établie dans le réseau que si les informations de débits (DB1, DB2) mémorisées dans les commutateurs (Np à Nq) sont représentatives d'un débit inférieur à un débit maximum écoulable (DBmax) par les commutateurs (Np à Nq).

2. Procédé conforme à la revendication 1, caractérisé en ce qu'un mot de débit (DEB) a une valeur signée représentée en complément à 2 dans le cas où ladite valeur est négative.

3. Commutateur temporel de paquets pour la mise en oeuvre du procédé conforme à la revendication 1 ou 2, comprenant des moyens d'entrée (CSA) pour détecter des paquets (PA, PF, PD) dans des voies multiplex entrantes (E0, E1, E2) afin de les transmettre en synchronisme, des moyens (MRE) reliés aux moyens d'entrée (CSA) pour multiplexer les paquets (PA, PF, PD) transmis par les moyens d'entrée (CSA) en paquets multiplexés, une mémoire tampon (MP) pour mémoriser temporairement les paquets multiplexés (PA, PF, PD), des moyens (MRS) pour démultiplexer les paquets (PA, PF, PD) lus cycliquement dans la mémoire tampon (MP) afin de les transmettre vers des voies multiplex sortantes (S0, S1, S2), et des moyens (CC) pour commander des commutations des paquets en fonction d'informations d'identification, de signalisation et d'acheminement contenues dans les paquets, caractérisé en ce qu'il comprend également des moyens (DRp) pour mémoriser lesdites informations de débit (DB1, DB2) et de les traiter en fonction des mots de débit (DEB) détectés dans les paquets de service (PA, PF).

4. Commutateur conforme à la revendication 3, caractérisé en ce que les moyens pour mémoriser et traiter (DRp) comprennent des registres de mémoire (R1, R2) associés respectivement à des ensembles de voies multiplex entrante et sortante (E1, S1 et E2, S2) pour mémoriser les informations de débit (DB1, DB2), des moyens (CA) pour identifier la voie multiplex entrante (E1, E2) dans laquelle est détecté un paquet de service entrant (PA, PF) afin de sélecter le registre de mémoire (R1, R2) correspondant à ladite voie multiplex entrante identifiée (E1, E2), des moyens (AD) pour lire l'information de débit (DB1, DB2) mémorisée dans le registre de mémoire sélecté (R1, R2) afin de la traiter en fonction du mot de débit (DEB) inclus dans le paquet de service entrant (PA, PF), et des moyens (CP) pour comparer l'information de débit traitée (DB1$_a$, DB2$_a$) à une autre information de débit représentative d'un débit maximum (DBmax) écoulable par la voie multiplex entrante identifiée (E1, E2) afin de signaler un dépassement dudit débit maximum (DBmax) en positionnant le cas échéant un bit déterminé (A/$\overline{R}$) du paquet de service (PA).

5. Commutateur conforme à la revendication 4, caractérisé en ce que les moyens pour mémoriser et traiter (DRp) comprennent, en outre, des moyens (DN) pour détecter dans les registres de mémoire (R1, R2) des informations de débit négatives (DB1, DB1$_a$, DB2, DB2$_a$) dues par exemple à des défauts de fonctionnement et pour initialiser à zéro lesdites informations de débit négatives, et des moyens (CV) pour surveiller l'activité de chacune des voies multiplex entrantes (E1, E2) et pour initialiser à une valeur prédéterminée les informations de débit (DB1, DB2) contenues dans les registres de mémoire (R1, R2) correspondant aux voies multiplex entrantes (E1, E2) dans lesquelles aucune activité n'est détectée.

6. Commutateur conforme à l'une quelconque des revendications 3 à 5, caractérisé en ce que les moyens pour multiplexer comprennent des moyens (MRE) pour réaliser une conversion paragonale des paquets entrants (PA, PF, PD) transmis par les moyens d'entrée (CSA), et en ce que les moyens pour démultiplexer et transmettre comprennent des moyens (MRS) pour réaliser une conversion paragonale des paquets (PA, PF, PD) lus dans la mémoire tampon (MP) inverse de la conversion paragonale dans les moyens pour multiplexer.

## Patentansprüche

1. Verfahren zur Reservierung von Übertragungsraten in einem zeitlichen Paketvermittlungsnetzwerk, in dem Dienstpakete (PA, PF) am Anfang und am Ende einer Übertragung zwischen den Endstellen (Tdr, Tde), die durch das Netzwerk verbunden sind, im Netzwerk übertragen werden, um insbesondere einen Übermittlungsweg für die Übertragung zu bestimmen und Betriebsinformation zwischen den Endstellen (Tdr, Tde) zu übertragen, dadurch gekennzeichnet, daß Ratenworte (DEB), die repräsentativ für die Raten der Übertragung sind, in den Dienstpaketen (PA, PF) enthalten sind, um Rateninformation (DB1, DB2), die in Vermittlern (Commutateurs) (Np-Nq) des Netzwerkes, über die die Dienstpakete (PA, PF) geführt werden, gespeichert ist und die repräsentativ ist für die gesamte Rateninformation, die von den Vermittlern (Np-Nq) abgesetzt wird, zu erhöhen, um die Vermittlungsraten vor der Herstellung der Übertragung zu reservieren, und um die Rateninformation (DB1, DB2) am Ende der Übertragung zu verringern, um in den Gruppenwählern (Np-Nq) die Vermittlungsraten freizusetzen, und dadurch, daß eine Übertragung in dem Netzwerk nur dann hergestellt wird, wenn die Rateninformation (DB1, DB2), die in den Vermittlern (Commutateurs) (Np-Nq) gespeichert ist, repräsentativ ist für eine Rate, die niederwertiger als eine maximal von den Vermittlern (Commutateurs) (Np-Nq) freisetzbare Rate ist.

2. Verfahren nach Anspruch 1, dadurch gekennzeichnet, daß ein Ratenwort (DEB) einen Wert, der im Zweierkomplement dargestellt ist, aufweist, wenn der Wert negativ ist.

3. Zeitlicher Paketvermittler zur Durchführung des Verfahrens nach Anspruch 1 oder 2 mit Eingangseinrichtungen (CSA) zur Entdeckung von Paketen (PA, PF, PD) in den Multiplex-Eingangsleitungen (E0, E1, E2) und zur ihrer synchronen Übertragung, mit Einrichtungen (MRE), die mit den Eingangseinrichtungen (DSA) verbunden sind, um die von den Eingangseinrichtungen (CSA) übertragenen Pakete (PA, PF, PD) in gemultiplexte Paketen zu multiplexen, mit einem Pufferspeicher (NP) zur vorübergehenden Speicherung der gemultiplexten Pakete (PA, PF, PD), mit Einrichtungen (MRS) zum Demultiplexen der von dem Pufferspeicher (MP) zyklisch eingelesenen Pakete (PA, PF, PD), um sie auf Multiplex-Ausgangsleitungen (S0, S1, S2) zu übertragen, und mit Einrichtungen (CC) zur Steuerung der Paketvermittlung in Abhängigkeit von Information über die Identifikation, die Zeichenbildung und die Übermittlung, die in den Paketen enthalten ist, dadurch gekennzeichnet, daß sie auch Einrichtungen (DRp) zur Abspeicherung dieser Rateninformation (DB1, DB2) und zu ihrer Verarbeitung in Abhängigkeit der Ratenworte (DEB), die in den Dienstpaketen (PA, PF) entdeckt werden, aufweist.

4. Vermittler (Commatateur) nach Anspruch 3, dadurch gekennzeichnet, daß die Einrichtungen zum Speichern und Verarbeiten (DRp) Speicherregister (R1, R2), die jeweils mit einer Gruppe von Multiplex-Eingangs- und — ausgangsleitungen (E1, S1 und E2, S2) verbunden sind, um die Rateninformation (DB1, DB2) zu speichern, Einrichtungen (CA) zur Indentifizierung der Multiplex-Eingangsleitung (E1, E2), in der ein ankommendes Dienstpaket (PA, PF) entdeckt wurde, um das Speicherregister (R1, R2) entsprechend der identifizierten Multiplex-Eingangsleitung (E1, E2) auszuwählen, Einrichtungen (AD) zum Lesen der in den ausgewählten Speicherregister (R1, R2) abgespeicherten Rateninformation (DB1, DB2), um sie in Abhängigkeit des im ankommenden Hilfspaket (PA, PF) enthaltenen Ratenwortes (DEB) zu verarbeiten, und Einrichtungen (CP) zum Vergleichen der Information der verarbeiteten Rate ($DB1_a$, $DB2_a$) mit einer anderen Rateninformation, die repräsentativ ist für eine maximal von der identifizierten Multiplex-Eingangsleitung (E1, E2) abesetzbaren Rate (DBmax), um einen Durchgang dieser maximalen Rate (DBmax) gegebenenfalls durch Setzen eines bestimmten Bits (A/$\overline{R}$) im Dienstpaket (PA) anzuzeigen.

5. Vermittler nach Anspruch 4, dadurch gekennzeichet, daß die Einrichtungen zum Speichern und Verarbeiten (DRp) außerdem Einrichtungen (DN) zur Entdeckung von Information über negative Raten (DB1, $DB1_a$, DB2, $DB2_a$) in den Speicherregistern, die beispielsweise von Funktionsfehlern verursacht sind, und zum Rücksetzen dieser negativen Rateninformation auf Null, und Einrichtungen (CV) zur Überwachung des Betriebs jeder der Multiplex-Eingangsleitungen (E1, E2) und zum Initialisieren der Rateninformation (DB1, DB2), die in den Speicherregistern (R1, R2) enthalten ist, die den Multiplexeingangsleitungen (E1, E2) entsprechen, in denen keine Aktivität entdeckt wurde, mit einem vorgebenen Wert aufweisen.

6. Vermittler nach einem der Ansprüche 3 bis 5, dadurch gekennzeichnet, daß die Einrichtungen zum Multiplexen Einrichtungen (MRE) zur Durchführung einer paragonalen Umwandlung der Eingangspakete (PA, PF, PD), die von den Eingangseinrichtungen (CSA) übertragen werden, aufweisen, und dadurch, daß die Einrichtungen zum Demultiplexen und Übertragen Einrichtungen (MRS) aufweisen zur Durchführung einer paragonalen Umwandlung der Pakete (PA, PF, PD), die in den Pufferspeicher (MP) eingelesen werden, die invers ist zu der paragonalen Umwandlung in den Multiplexeinrichtungen.

## Claims

1. Method for reserving communication bit rates in a packet time-division switching network in which service packets (PA, PF) are transmitted in the network at the beginning and end of a communication between terminals (Tdr, Tdé) connected to the network, thereby particularly determining a routing route for the communication and transmitting service informations between the terminals (Tdr, Tdé), characterized in that bit rate words (DEB) representative of bit rates of the communication are included in the service packets (PA, PF) to increment bit rate informations (DB1, DB2) memorized in switches (Np to Nq) of the network crossed by the service packets (PA, PF) and representative of total bit rates flowed by the switches (Np to Nq) thereby reserving said bit rates of the communication prior to setting-up of the communication, and to decrement the bit rate informations (DB1, DB2) at the end of the communication thereby freeing the communication bit rates in the switches (Np to Nq), and in that a communication is established in the network only if the bit rate informations (DB1, DB2) memorized in the switches (Np to Nq) are representative of a bit rate below a maximum bit rate (DBmax) flowable by the switches (Np to Nq).

2. Method according to claim 1, characterized in that a bit rate word (DEB) has a signed value represented as two's complement when said value is negative.

3. Packet time-division switch for carrying out the method according to claim 1 or 2, comprising input means (C5A) for detecting packets (PA, PF, PD) in incoming multiplex ways (E0, E1, E2) for transmitting them in synchronism, means (MRE) connected to the input means (CSA) for multiplexing the packets (PA, PF, PD) transmitted by the input means (CSA) into multiplexed packets, a buffer memory (MP) for temporarily memorizing the multiplexed packets (PA, PF, PD), means (MRS) for demultiplexing the packets (PA, PF, PD) read cyclically in the buffer memory (MP) in order to transmit them towards outgoing multiplex ways (S0, S1, S2), and means (CC) for controlling switchings of the packets as a function of identification, signalling and routing informations contained in the packets, characterized in that it also comprises means (DRp) for memorizing said bit rate informations (DB1, DB2) and for processing them as a function of the bit rate words (DEB) detected in the service packets (PA, PF).

4. Switch according to claim 3, characterized in that the memorizing and processing means (DRp) comprise memory registers (R1, R2) respectively associated with assemblies of incoming and outgoing multiplex way (E1, S1 and E2, S2) for memorizing the bit rate informations (DB1, DB2), means (CA) for identifying the incoming multiplex way (E1, E2) in which an incoming service packet (PA, PF) is detected in order to select the memory register (R1, R2) corresponding to said identified incoming multiplex way (E1, E2), means (AD) for reading the bit rate information (DB1, DB2) memorized in the selected memory register (R1, R2) in order to process it as a function of the bit rate word (DEB) included in the incoming service packet (PA, PF), and means (CP) for comparing the processed bit rate information ($DB1_a$, $DB2_a$) to another bit rate information representative of a maximum bit rate (DBmax) flowable by the identified incoming multiplex way (E1, E2) in order to signal an overstepping of said maximum bit rate (DBmax) by positioning eventually a given bit ($A/\overline{R}$) of the service packet (PA).

5. Switch according to claim 4, characterized in that the memorizing and processing means (DRp) further comprise means (DM) for detecting in the memory registers (R1, R2), negative bit rate informations (DB1, $DB1_a$, DB2, $DB2_a$) caused for example to operation faults, and for resetting at zero said negative bit rate informations, and means (CV) for supervising the activity of each of the incoming multiplex ways (E1, E2) and for setting at a predetermined value the bit rate informations (DB1, DB2) contained in the memory registers (R1, R2) corresponding to the incoming multiplex ways (E1, E2) in which no activity is detected.

6. Switch according to any one of claims 3 to 5, characterized in that the multiplexing means comprise means (MRE) for carrying out a parallel-diagonal conversion of the incoming packets (PA, PF, PD) transmitted by the input means (CSA), and in that the demultiplexing and transmitting means comprise means (MRS) for carrying out a parallel-diagonal conversion of the packets (PA, PF, PD) read in the buffer memory (MP) that is the opposite of the parallel-diagonal conversion in the multiplexing means.

EP 0 383 660 B1

*FIG.1*

Tdr

Mr T(p-1) Mr T(p) Mr T(p+1) ---Mr T(q-1) Mr Tde' Mr T(q) T(q+1)

N(p-1) Np N(p+1) N(q-1) Nq N(q+1)

PA1,DEB=+10,A/R="1'

PA2,DEB=0,REP="1'

PD

PF,DEB=-10,A/R="1'

R1 | 10 | R1 | 10 | +10 -10 | R1 | 25 | +10 -10 | R1 | 40 | +10 -10 | R1 | 40 | +10 -10 | R1 | 40

R2 | 35 | R2 | 35 | R2 | 5 | R2 | 15 | R2 | 50 | R2 | 50

DR(p-1) DRp DR(p+1) DR(q-1) DRq DR(q+1)

Mr

M Ms

Nr

R1

DRr

R2

INTERFACE
D'ACCES AU
RESEAU PUBLIC

Vers le
réseau
public

IA

*FIG.2*

ch1 ch2

BPA | NI de source, NI de destination, mot de distance D | DEB | REP

BS | 96 bits | A/R̄ R/Ē

*FIG. 3*

*FIG. 4*

FIG.5

*FIG.6*

DISPOSITIF DE RESERVATION
DE DEBITS